Europäisches Patentamt

(19) European Patent Office

Office européen des brevets

(11) **EP 0 885 802 A2**

(12) **EUROPEAN PATENT APPLICATION**

(43) Date of publication:
23.12.1998 Bulletin 1998/52

(51) Int. Cl.$^6$: **B62M 23/02**

(21) Application number: 98110781.6

(22) Date of filing: 12.06.1998

(84) Designated Contracting States:
AT BE CH CY DE DK ES FI FR GB GR IE IT LI LU MC NL PT SE
Designated Extension States:
AL LT LV MK RO SI

(30) Priority: 18.06.1997 KR 9725507

(71) Applicant: Yim, Byung Dae
Roseland, New Jersey 07068 (US)

(72) Inventor: Seol, Marn Taek
Yangpyong Gun, Kyonggi Do (KR)

(74) Representative:
Busse & Busse
Patentanwälte
Postfach 12 26
49002 Osnabrück (DE)

(54) **Electric driving device for an electric bike**

(57) An electric device of an electric bike utilizes the tire direct contact method for driving the tire (70) through pressure friction. The main bracket members (30,40) supporting a driving roller (20) in contact with the tire (70) are installed to be rotated in operation and also fixed to the seat tube (60) of the bike. By making the driving roller (20) contacting the tire (70) through a spring (49), the wheel of the bike can rotate with a minimum friction force depending on the road condition by the dynamical arrangement between a center of the wheel, a contact point of the driving roller (20) and the tire (70), and a hinge point serving as a center of rotation. This has the effect that the driving roller (20) can automatically change position by adjusting automatically the pressure between the tire (70) and the driving roller (20) with a minimum friction pressure being able to rotate the wheel depending on the road condition. So, the consumption of electric energy is substantially reduced and also a loss of electric energy is reduced by preventing free running of the driving roller (20).

FIG. 5

## Description

The present invention relates to an electric driving device for an electric bike.

An electric bike is quite different from a motor cycle which is driven only by a motor driving force, while with a bike human power is the main driving force and motor driving power is added additionally, that is, human power and motor driving power have combined.

When classifying an electric bike according to the driving method, there are three kinds of method such as the "chain driving method" which drives by connecting a bolt on a chain mounting the motor and the reduction gear on its own body, the "direct driving method" which drives by mounting the motor and the reduction gear to its own wheel, and the "tire direct contact method" which drives for rotation by a pressure friction of the tire.

The most essential problems are to minimize the weight, to create higher efficiency of the motor driving unit, to minimize the road resistance in pedaling in case of having no motor power, and to be economic in price.

However, as Korean utility model No. 94-5540 (Aug. 18, 1994), Korean utility model No. 94-8681 (Dec. 27, 1994) and Korean utility model No. 96-2581 (March 27, 1996) have described, a chain driving method which drives by connecting a bolt on a chain mounting the motor and the reduction gear on its own body, or a direct driving method which drives by mounting the motor and the reduction gear on its own wheel could create a great loss of energy, lower the efficiency, become heavier in weight, and increase the price, since driving is effected in combination with several reduction gears between the pinion gear and the driven gear (or pulley) of the motor by the reduction gear of the motor.

To overcome the above mentioned problems, the electric bike has selected a tire contact method which actuates the tire of a bike to rotate by force of the friction under pressure, and this method was essentially developed to allow a direct pressure contact of the driving roller. Therefore, the present invention relates to the category of the so called tire direct contact method.

However, in the conventional tire direct contact method of the electric bike, the bike is driven by the forced friction in the interfacing area between the tire and the driving roller, since the driving roller in contact with the tire has been fixed, so in case the air pressure of the tire is lower, the driving roller may not be actuated by free running due to the reduced friction force between the tire and the driving roller when starting or running up a hill, and on the contrary, in case the air pressure of the tire is higher, a loss of the electric energy occurs, as much as unnecessary friction force may be created or the road resistance may be increased in pedaling due to the increased friction force between the tire and the driving roller.

Also, the above method may involve many problems such as the tire becoming broken on running on the road after the saw teeth or the knurling eyes had allowed to be formed on the surface of the driving roller to increase a rotating friction force.

The present invention aims to solve the above problems, and so the object of the present invention is to provide a driving device enabling the bike to be driven with a minimum friction force.

This object is achieved by an electric driving device as characterised in claim 1. Further developments of the invention are defined in the dependent claims. According to the invention, an electric driving device of an electric bike has been provided having a minimum friction pressure, changing the driving roller automatically depending on the rotating force and the road or rolling condition in the "tire direct contact method" which drives to rotate the bike by the pressurised friction. This means that the driving roller is variable depending on the rotating force and the road condition of the bike using the tire direct connection method for driving to rotate the tire by a friction under pressure.

A preferred embodiment of the present invention and its operation will now be described in detail below with reference to the drawings, wherein

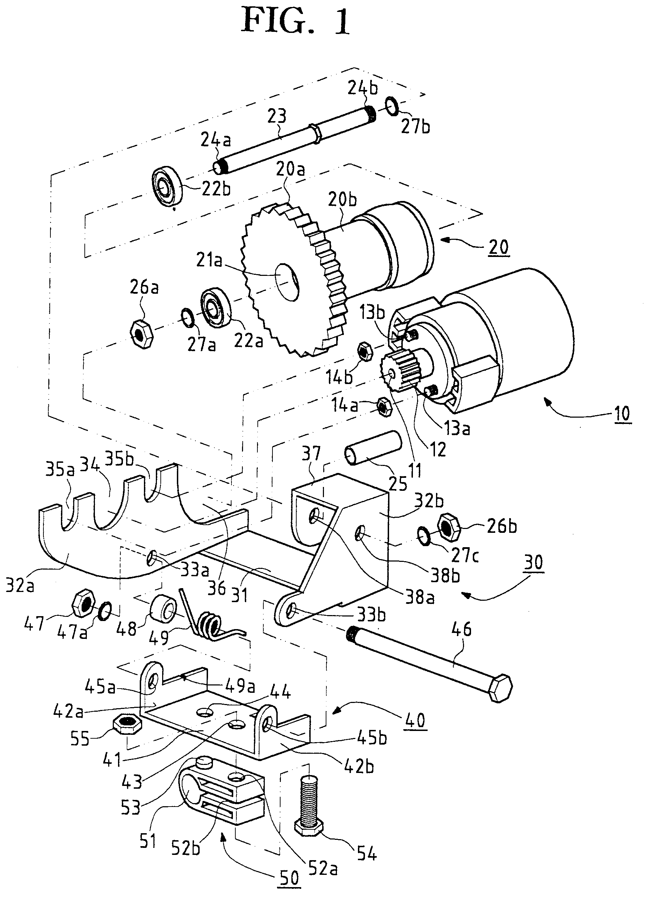

Fig. 1 is an exploded perspective view illustrating the drive according to the present invention,

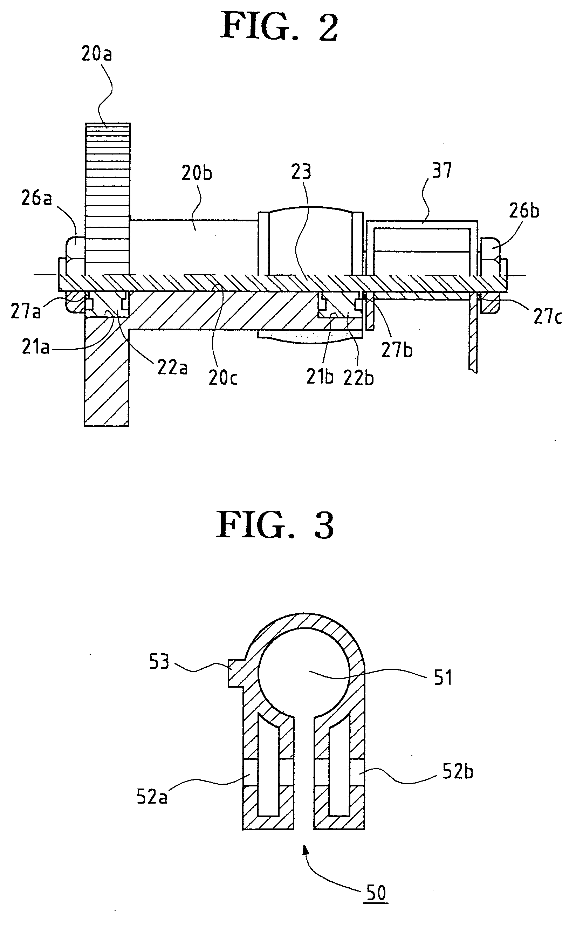

Fig. 2 is an assembled cross sectional view of the drive according to the present invention,

Fig. 3 is a cross sectional view of the clamp of the drive according to the present invention,

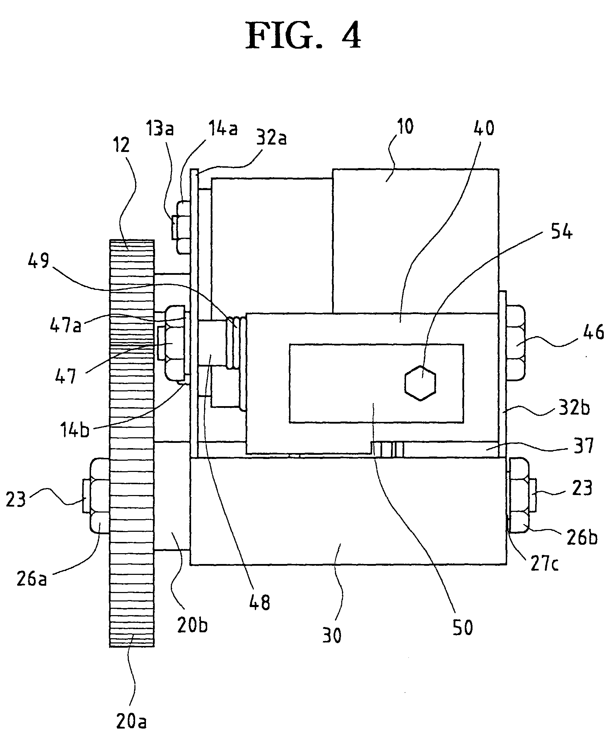

Fig. 4 is a bottom view in assembled condition of the drive according to the present invention,

Fig. 5 is an operating condition view of the drive according to the present invention, and

Fig. 6 is a vector analyzed view in operation of the drive according to the present invention.

The drive of the present invention basically comprises a motor 10 serving as the drive or driving means, a driving roller 20 for a rotary drive, a main bracket 30 to support the motor 10 and the driving roller 20, a clamp bracket 40 for supporting on rolling to the bracket 30, and a clamp 50 to be grounded to the bracket 40 and mounted to the seat tube of the bike.

The motor 10 is mounted by assembling a pinion gear 12 to its rotating shaft 11 in keeping symmetry with the rotating shaft on a line of the imaginary center lines which penetrate through the center of the rotating shaft 11 to the place where the pinion gear 12 is mounted. Further, the motor 10 has protected lock washers or members 13a, 13b with integration, which are inserted into the motor support holes 35a, 35b formed on the main bracket 30 to be described below and are secured by the pivot nuts 14a, 14b.

The driving roller 20 consists of a gear 20a and a roller 20b, and a shaft hole 20c is formed by penetrating through both of its end planes, so that a gear shaft 23 can be inserted, and the both end parts of the shaft hole 20c consist of the bearing holes 21a, 21b formed larger than the shaft hole 20c. Further, the driving roller 20 contains the bearings 22a, 22b which are inserted into the bearing holes 21a, 21b. The gear shaft 23 which has washers 24a, 24b on both ends is inserted between the center hole of the bearings 22a, 22b. A column 25 is inserted in the gear shaft 23, and the pivot nuts 26a, 26b are clamped with the washers 24a 24b of the gear shaft 23, while sealing rings are denoted by reference numerals 27a, 27b, 27c.

The main bracket 30 consists of a base plate 31 and two side plates 32a, 32b which are integrally formed vertically on both ends of the base plate 31, and clamp holes 33a, 33b for the clamp bracket are formed to clamp the following clamp bracket 40 at the two side plates 32a, 32b. Also, at the side plate 32a of two side plates, a motor insert hole 34 for supporting and inserting the motor 10 is formed, as well as a support hole 36 for the driving roller to support the motor support hole 34a, 34b and the driving roller 20. On the other hand, at the other side plate 32b, a gear shaft support 37 integrally extends the upper end plane of the side plate 32b, so as to be in parallel with the base plate 31 and then again extends downwards the extended end, so as to be in parallel with the side plate 32b. Further, gear shaft insert holes 38a, 38b in which the gear shaft 23 can be inserted are formed both in the plane of the gear shaft support 37 being in parallel with the side plate 32b and in the side plane 32b itself, and in this time the bottom part of the main bracket 30 may allow to be slanted a little.

The clamp bracket 40 consists of a clamp fixed hole to fix the clamp 50 described below, a base plate 41 having the clamp support hole 44 in which a support protrusion 53 projecting from the clamp 50 is inserted, and two side plates 42a, 42b which both end plates of the base plate 41 are integrally extended vertically.

Also, at a protruding portion of the extended side plates 42a, 42b, main bracket clamping holes 45a, 45b are formed corresponding to the clamp holes 33a, 33b for the clamp bracket formed on the main bracket 30 into which a reamer bolt 46 with a nut 47 is inserted for clamping. At the side plate 42a a spring clamp hole 49a being clamped by one part of a twist spring 49 is formed, ad a column 48 and the twist spring 49 are combined with the reamer bolt 46.

Clamp 50 is constructed in such a manner that one side of one of the two plate boards forming a double structure arranged in parallel with the clamp holes 52a, 52b for the clamp bracket can be circularly bent to have a seat tube clamp hole 51 being connected to the seat tube of the bike, and also the support protrusion part 53 of the clamp 50 is formed to combine with the clamp support hole 44 being formed in the clamp bracket 40 by protruding beyond the one side of the plate boards. Reference numeral 54 denotes a bolt and 55 a nut, which are used in connecting the clamp bracket 40 to the clamp 50.

The combined relation of the above structure according to the present invention will be described below. The bearings 22a, 22b are settled in the bearing holes 21a, 21b of both ends of the driving roller 20, and after the gear shaft 23 is inserted and ring 27a is inserted in the gear shaft of the driving roller 20, the pivot nut 27a is combined with the washer part 24a. Then, while the gear shaft 23 protruding toward the roller 20b of the driving roller 20 is inserted into the gear shaft insert hole 38a in the gear shaft support part 37 of the main bracket 30, a ring 27b, a column 25 and a ring 37c are sequentially inserted, and thereafter the washer part 24b of the gear shaft 23 is allowed to protrude from the side plate 32b of the main bracked 30 by passing through the gear shaft insert hole 38b, and when the pivot nut 26b is combined with the washer part 24b to fix, the driving roller 20 can be connected to the main bracket 30, so that the driving roller 20 is supported to settle in this driving roller support hole 36 of the main bracket 30.

The lock washers or members 13a, 13b of the motor 10 are allowed to be inserted in the motor support holes 35a, 35b, and simultaneously the rotating shaft part 11 of the motor is inserted in the motor insert hole 34 to combine it with the main bracket 30 by using the pivot nuts 14a, 14b.

After the reamer bolt 46 is inserted in the clamp bracked combing hole 33b of the main bracket 30 assembling the motor 10 and the driving roller 20, the clamp bracket 40 is combined with the reamer bolt 46 through the holes 45a, 45b with the main bracket 30, and then the twist spring 49 is combined with the column 48. The washer part of the reamer bolt 46 is allowed to protrude to the one side of the main bracket 30 through the clamp hole 33a of the clamp bracket to assemble the clamp bracket 40 with the main bracket 30 by using the pivot nut 47, and at this time one end of the twist spring 49 is supported to the body of the motor 10 and the other end is held to the spring connecting hole 49a of the clamp bracket 40 by bending its end part so that the main bracket 30 can receive a cushion.

After that, the seat tube part 60 of the bike is inserted in the seat tube fix hole 51 to combine to clamp with the bike to allow the supporting protrusion part 53 to be inserted into the clamp support hole 44 of the clamp bracket 40, and then the fix holes 52a, 52b of the clamp bracket are coincided with the clamp fix hole 43 to assemble together by using bolt 54 and nut 55. At this time, the roller 20b of the driving roller means 20 can be fixed to the seat tube 60 at the position contacting highly around the peripheral plane of the bike tire 40 as the clamp 50 may allow to move up and down, since the seat tube of the bike tire 40 has formed wider its width as it goes up from the underside of the middle portion.

Thereafter, operating preparation will be completed by a power source plug that would connect to the controller built at the battery.

Operation of the above construction according to the present invention will be described below with reference to the drawing.

First, an essential principle of the operation is to adjust automatically the pressure strength of the driving roller 20 and the tire 70 with a minimum friction force which can rotate the wheels of the bike depending on the roading or running condition of the bike by the dynamical arrangement between the bracket members which support a center of the tire, a tire contact point of the tire of the driving roller 20 and the driving roller 20 and which also are constructed to rotate.

In other words, the tire 70 can rotate with such a minimum pressure as possible as rotating the wheel depending on the air pressure of the tire in the normal road, but the driving roller 20 can always be adjusted automatically to raise the pressure friction from "0 to 100" without free running at any time when the bike may run on the slope such as on a hill.

Here, "0" pressure friction means a function force in the time when there is not any friction force between the driving roller 20 and the tire 70, and "100" pressure friction means a friction force in the time of stopping the rotation of the driving roller when the wheel of the bike may stop in braking at the time of the motor running.

With the drive means of the present invention having the operating principle as mentioned above, in the drawing a hinge point is a rotating center of the reamer bolt 46 by which the clamp bracket 40 and the main bracket 30 are connected. The driving roller 20 can rotate by the rotating force of the rotating shaft 11 being transmitted through the pinion gear 12 to the gear 20 a of the driving roller 20 which is engaged with the pinion gear 12.

In this time, in the situation where one end of the gear shaft 23 is inserted in the gear shaft insert hole, the gear shaft 23 is supported by a column 25 and a ring 27c and also fixed with the pivot nut 26b, and the driving roller 20 can rotate the fixed gear shaft 23 as a shaft point to allow to rotate the tire 70 contacted closely, since the bearings 22a, 22b combined with the gear shaft 23 have been inserted in the bearing hole 21a, 21b formed at both ends of the driving roller 20.

On the other hand, the clamp 50 fixed to the seat tube of the bike and the clamp bracket 40 supported fixedly to this clamp 50 are supported to the shaft by the main bracket 30 and the reamer bolt 46 respectively, and the main bracket 30 which has mounted the motor 10 and the driving roller 20 through constructing a reamer bolt 46 as the rotating shaft by the twist spring 49 secured at the reamer bolt 46 may receive a cushion on the clamp bracket 40, so that the roller part 20b of the driving roller 20 is lightly contacted to the tire 70 and simultaneously the main bracket 30 is freely pivoting on the reamer bolt 46 serving as a hinge point, and thus the contacting point with the tire 70 will be variable so that a rotating force of the motor 10 can be transmitted to the wheel of the bike.

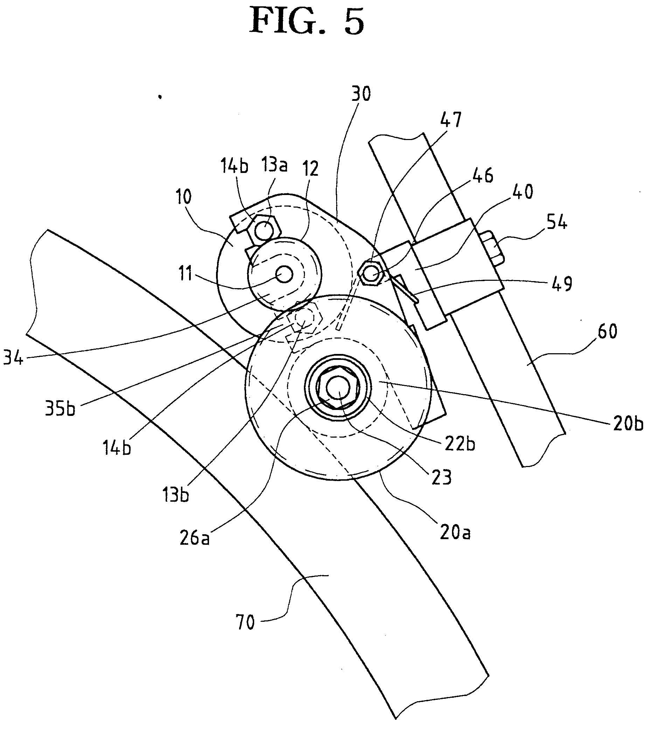

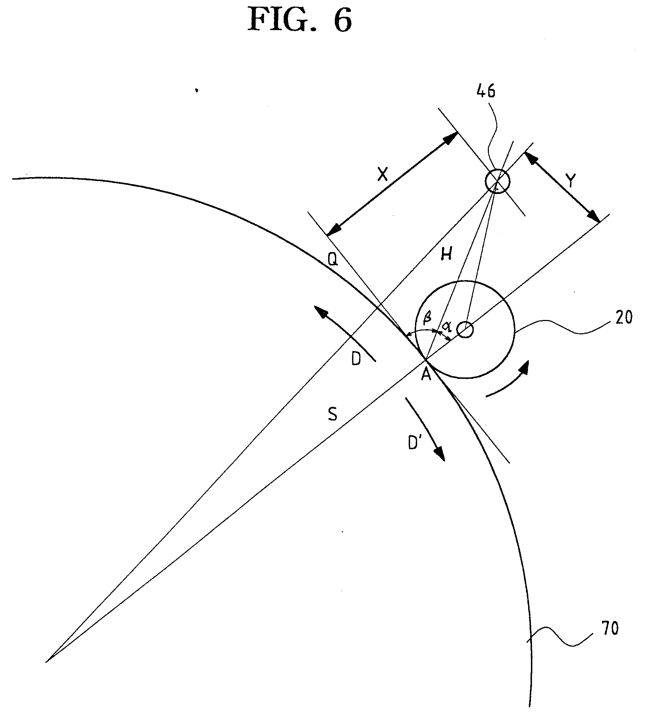

Figure 6 shows a vector analyzed diagramm in operation of the drive of the present invention. When the motor 10 is rotating, the driving roller 20 is reversely rotating as the arrow direction against the rotating direction of the motor 10 and is contacted as the point A and the tire is again rotated in the rotating direction of he motor 10 to drive the bike forwards as illustrated in figures 5 and 6.

In figure 6, if we take an angle α wich is formed between the contact point A of the tire 70 and the driving roller 20 with an extended line S of the wheel center, and point A with an extended line H extending the shaft center of the reamer bolt 46 serving as a hinge point, and also take an angle β which is formed between the extended line H and a tangent line Q from point A, the device according to the present invention can be fastened to the seat tube 60 of the bike by making the hinge point to be tan α > tan β , namely X > Y.

In a dynamical point of view, in case of β > α, the driving roller 20 may allow to rotate the tire 70 without having a slide from the contact point A of the tire 70, and the smaller α is, the more proportional a friction force will strongly be created, and then the friction force can reach the maximum value to create an infinite force just before until α becomes 0 (that is, just before H and S will overlap as Y approaches to O), and the friction force will be lost if α exceeds 0, on the contrary in case of β ≤ α a structural friction force becomes 0.

Accordingly, in the condition of β > α, a friction force is created without having a slide of the driving roller 20 from the tire 70, and due to the above dynamical principle, the greater the roading resistance (such as a driver's weight and a hill condition), the more the contact point A of the driving roller 20 will move to an arrow direction through the rotating force of the motor 10, and α becomes as small as the moved distance, the force pressing the tire 70 becomes great to increase the friction force, so that the force can allow the wheel of the bike to rotate owing to exceeding the roading resistance.

In the above, the reason that a contact point A of the driving roller 20 moves to an arrowed direction D is to move the driving roller 20 to the arrow direction along the tire surface by an action and a reaction between the driving roller 20 and the tire 70, since the driving roller 20 may pivot on the reamer bolt 40 serving as a hinge point, while the tire 70 may pivot on the fixed shaft.

As the action and reaction power acting between the driving roller 20 and the tire 70 may be relatively smaller by the air pressure of the tire 70, if the roading resistance is lower, the contact point A of the driving roller 20 will be returned to the opposite direction, so that α will be greater and the friction force smaller.

Therefore the friction force forcing the wheel to rotate can be preserved, since α can be changed from time to time by the above principle depending on the road or rolling resistance of the wheel.

In other words, with the motor drive running, $\alpha$ is changed in correspondence with the rolling condition such as the road resistance of the wheel by pivoting the hinge point, so that the rotating force is transmitted to the tire 70 to drive the wheel by creating as much the friction force as required by the driving roller 20.

With the bike running by a motor drive, the device according to the present invention is continuously vibrating with an axis of the hinge point depending on the road resistance of the wheel, that is, the contact point A is automatically controlled in its position at every moment endlessly, since the friction force of the electric motor (magnitude of angle $\alpha$) is always changed depending on the road conditions such as a normal road or an inclined road.

In this time, the angle $\alpha$ should be set in such a range that a rotating movement of the driving roller 20 can be stopped by actuation of a brake in the driving state, and therefore, when the speed by pedaling is greater than the speed by the motor, the energy consumption of the motor 10 is almost negligible.

When the bike is run only by the pedaling without the motor power, the structural friction force between the tire 70 and the driving roller 20 becomes zero, that is, the driving roller 20 is almost separated from the tire 70 ($\beta \leq \alpha$) and not any roading resistance arises because of the no longer existing friction force, since the contact point A of the driving roller 20 being contacted with the tire 70 can receive a force towards D' direction from the contact point A by the moment of inertia.

Of course, although some friction force between the tire 70 and the driving roller 20 may exist, the energy loss produced by free rotation of the motor 10 being connected to the driving roller 20 and the gear may regarded to be negligible, because the force is so low that it can be disregarded in comparison with the driving speed.

One of the most important characteristic is that the motor 10 is protected from damaging because the driving force of the motor being driven by electromotive force is absorbed by the air pressure of the tire 70, even when the motor abruptly receives a harmful shock like a sudden start without pedaling.

Since the driving force to drive the wheel according to present invention is a friction force by a structural arrangement which is quite different from the conventional "tire direct contact method" for forcing the creation of a friction force by forming the sawteeth or the knurling eyes on the surface of the driving roller, the more slippery the tire contacting surface of the driving roller and the surface of the tire are formed, the more they are profitable.

The reason is that, the more slippery the surfaces of the tire 70 and the driving roller 20 are formed, the more the efficiency is improved, as a variable sensing of the angle $\alpha$ is favorable in the contacting area being widened.

Furthermore, the device of the present invention has a same speed and a climbing ability regardless of the wheel size of the bike. The reason is the following: Because as much the contacted surface of the tire as the circumferential run distance per an hour of the driving roller 20 being driven at a constant speed is rotaed, the same speed of the bike can be obtained regradless of the wheel size.

Therefore, in the point of view of the general purpose use, the device according to the present invention is very advantageous, since it can obtain an equal running performance even when applied in different bikes.

Since the device according to the present invention as above described is rotated with a minimum friction pressure by adjusting the driving roller automatically depending on the road condition of the wheel, an unnecessary friction loss is prevented and an electric energy loss is not only prevented, but also the distance and the time that can be run with the equal capacity of a battery can be extended.

A damage of the tire is prevented owing to the slippery surface of the driving roller and the tire, and a damage of the motor is prevented by absorbing the driving force of the motor being driven by an electromotive force even in case of the tire receiving a harmful shock as in a sudden start. Further, in the point of view of the general purpose use, the device is extremeley advantageous regardless of the wheel size and can obtain a remarkable efficiency in the economical aspect due to unnecessity of an reduction gear and so forth.

## Claims

1. An electric driving device for an electric bike utilizing a tire direct contact method which is driven by a pressure friction force to the tire (70) combined with the motor (10), a driving roller (20) and a main bracket (30) supporting them, the bracket (30) supporting the driving roller (20) being contacted to the tire (70) being installed to fix the seat tube (60) of the bike, and the driving roller (20) being constructed to be contacted to the tire (70) by using a spring (49), so that the friction force between the driving roller (20) and the tire (70) is automatically adjustable by a minimum friction force being able to rotate the wheel depending on the rolling condition of the bike through the dynamical arrangement between a center of the wheel, a contact point (A) of the driving roller (20) and the tire (70), and a hinge point (46) serving as a rotating center.

2. An electric driving device according to claim 1, wherein the driving roller (20) comprises a shaft hole (20c) formed by penetrating through both its ends, a bearing hole (21a, 21b) is formed on the both ends of the shaft hole (20c) with a diameter greater than the shaft hole (20c), a bearing (22a, 22b) is inserted in each bearing hole (21a, 21b), and the gear shaft (23) is installed by inserting between the shaft hole (20c) and the center hole of the bearing (22a, 22b), so that the driving roller (20) is pivotable on the gear shaft (23) fixed by connecting to the main bracket (30).

3. An electric driving device according to claim 1 or 2, wherein the main bracket (30) comprises a clamp bracket (40) with combine holes (33a, 33b) formed in vertical parts with integration on both ends of a base plate (31), a motor insert hole (34) is provided to insert the motor installed on the one side of a plate board (37) and a driving roller support hole (36) to support the motor support hole (34a, 34b) and driving roller (20), and gear shaft insert holes (38a, 38b) in parallel with the upper surface of the other side of the plate board (37) with the base plate (31) and inserting the gear shaft (20c) of the driving roller (20) by reextending the extended end part downwards.

4. An electric driving device according to claim 3, wherein the clamp bracket (40) comprises a clamp fixe hole to fix a clamp (50), a base plate (41) having a clamp support hole (44) inserted by a support protrusion (53) protruding from the clamp (50), two side plates (42a, 42b) formed vertically with integration by extending both ends of the base plate (41), the main bracket combine hole (33a, 33b) receiving a reamer bolt (46) by reextending the two side plates (42a, 42b), and a spring combine hole (49a) is combined with one side end part of a twist spring (49).

5. An electric driving device according to claim 4, wherein the clamp (50) comprising the seat tube fix hole (50) connected the the seat tube (60) is formed by bending circulary the one side of two plate boards of a double structure arranged in parallel having the clamp bracket fix hole (50), and the support protrusion (53) connected to the clamp support hole (44) is formed by protruding the one side of the plate boards.

6. An electric driving device according to any of claims 1 to 5, wherein the main bracket (30) and the clamp bracket (40) are combined by a reamer bolt (46) comprising a twist spring (49) and defining the center of rotation of the bracket members (30,40).

# FIG. 1

# FIG. 2

20a

26a

20b  23  37  26b

27a

21a

22a  20c  21b  22b  27b  27c

# FIG. 3

53

51

52a  52b

50

# FIG. 4

# FIG. 5

# FIG. 6